# EUROPEAN PATENT APPLICATION

(11) **EP 2 180 444 A1**
(43) Date of publication of application: **28.04.2010**
(21) Application number: 09012254.0
(22) Date of filing: 28.09.2009
(51) Int. Cl.: G06Q 30/00, G06F 21/00

(54) **System and method for determining an anonymous user-centric cross community reputation**

(30) Priority: 22.10.2008 IL 19481608
(71) Applicant: Deutsche Telekom AG, 53113 Bonn (DE)
(72) Inventor: Hay, David, Haifa 34987 (IL); Zivan, Roie, Pittsburgh Pennsylvania 15217 (US); Hendler, Danny, Kiryat Ono 55238 (IL)
(74) Representative: Flaccus, Rolf-Dieter

(57) **Abstract**

The invention is a system and computer implemented method for using the system to determine a cross-community reputation for a specific user that participates in one or more communities belonging to the group of communities, while maintaining the anonymity of the user. The method is administered by a Central Authority (CA), which is responsible for authenticating the validity of users, and disclosing their anonymity in case of illegal or malicious activity and a Cross-Community Reputation Entity (CCRE) which is responsible for issuing a cross-community reputation certificate (CCRC), based on the reputation certificates from the communities. The system comprises: computers of a plurality of users who are members of one or more of the communities; computers of each of the communities in the group of online communities; computers of the CA and the CCRE; and software components located on each of the computers of the users, the communities, the CA, and the CCRC.

## Description

### Field of the Invention

The present invention relates to online communities, which are group interactions in the Internet. Specifically, the present invention relates to a method for calculating cross-community reputation of a user, while maintaining his anonymity.

### Background of the Invention

Online communities such as opinion forums, chat-rooms and blogs are becoming the dominant instruments for group interaction in the Internet. A large part of the communication is between people who do not know one another personally. Online communities usually aim for quality and a good reputation, so that their popularity and the number of page views increase. In order to achieve this goal, reputation systems were developed, which are filtering algorithms designed for determining ratings for each user of a community. This is similar to a recommendation system, with the purpose of users recommending each other. For example, a simple reputation system records a rating (either positive, negative, or neutral) after each pair of users conducts a transaction. A user's reputation comprises the count of positive and negative transactions in that user's history.

Reputation systems are often useful in large online communities, in which users may frequently have the opportunity to interact with users with whom they have no prior experience. In such a situation, it is helpful to base the decision whether or not to interact with a specific user on the prior experiences of other users. Unfortunately, online communities occasionally suffer from immoral or illegal behavior since the participants are anonymous.

For users, there is currently no option of transferring the reputation established in one community, such as good peer assessments, into another community so as to profit there from the positive reputation in the first group, while maintaining their anonymity. A system designed to provide users with this option should be built on the fact that all interactions between users and communities are done with pseudonyms and should meet the following requirements:
1. A user should have a different pseudonym for each community. These pseudonyms should be unlinkable in the sense that even if the communities join their databases, a linkage between the user different pseudonyms cannot be revealed.
2. Communities should issue reputation certificates to their registered users. These certificates can be presented to other communities without revealing the user's identity.
3. Certificate transfer between users will reveal the user identity. This should deter users from transferring their certificates to other users.
4. Cross-community reputation should be calculated by a stand-alone entity. This entity should receive the reputation certificate of a user from all the communities he participates in, and should issue a cross-community reputation.
5. In case of fraud or cheating, the anonymity of the users can be revealed by a trusted authority.

It is important to distinguish between the pseudonym of a user and his or her nick-name. While the first is a cryptographic object which should maintain strict requirements, the latter is usually a free-text that may have a meaning in natural language.

Lysyanskaya et al. [A. Lysyanskaya, R.L. Rivest, and A. Sahai. Pseudonym systems. Selected Areas in Cryptography, pages 184 - 199, 1999] provides cryptographic means for stratifying requirements 1-3 and 5, by using an asymmetric-key cryptosystem and zero-knowledge proof. Asymmetric-key cryptosystem is based on a pair of keys, public key and private keys, which are mathematically correlated. The user publishes his public key and keeps his private key secret. Any message sent to the user is encrypted with the public key and can only be decrypted by him, using its private key. However, the Lysyanskaya system can not prevent a user from hiding a poor reputation from some communities, in order to improve his cross-community reputation.

It is therefore an object of the present invention to provide a system that calculates cross-community reputation and satisfies all five above requirements.

Other objects and advantages of present invention will appear as the description proceeds.

### Summary of the Invention

In a first aspect the invention is a system to determine a cross community reputation for the users of for a group of online communities. The system comprises:
a. computers of a plurality of users who are members of one or more of the communities;
b. computers of each of the communities in the group of online communities;
c. computers of a Central Authority (CA) which is responsible for authenticating the validity of users, and disclosing their anonymity in case of illegal or malicious activity;
d. computers of a Cross-Community Reputation Entity (CCRE) which is responsible for issuing a cross-community reputation certificate (CCRC), based on the reputation certificates from the communities; and
e. software components located on each of the computers of the users, the communities, the CA, and the CCRC.

The cross community reputation is determined by the software components, which are configured to enable carrying out online interactions according to a predetermined sequence between the computers of the users, communities, CA and CCRE.

In embodiments of the system of the invention the online interactions include a requirement that the CA maintain a record that contains a list of communities in which each user was registered in the past to prevent the user from hiding a bad reputation.

In embodiments of the system of the invention each user has a different pseudonym for each community, the pseudonyms being unlinkable.

In a second aspect the invention is a computer implemented method for using the system of the first aspect to determine a cross-community reputation for a specific user that participates in one or more communities belonging to the group of communities, while maintaining the anonymity of the user. The method is administered by the CA and the CCRE. The method comprises the steps of:
a. the user requests from CA to generally register in the system;
b. CA opens an internal record of the user and issues a pseudonym to the user;
c. the user authenticates himself to CA by using the pseudonym, and requests to register in one or more of the communities that are members of the group;
d. CA issues a single-use certificate for each of the communities, wherein each of the single-use certificate enables the user to register in one specific community;
e. the user presents the certificate/s to the community/ies of his choice;
f. the user receives from each of the communities of his choice a pseudonym which allows him to interact with other members of the group community;
g. as time passes, each community compiles a reputation for the user;
h. the user requests his reputation from each community;
i. the user sends his pseudonyms from all of the communities in which he is registered to CA and requests certification;
j. CA issues a single-use validity certificate containing a list of all of the user's communities;
k. the user sends the single-use validity certificate and the reputation from each community to CCRE;
l. CCRE checks that it received the user's reputation from all the communities and the single-use validity certificate and calculates a time stamped multiple-use cross community reputation certificate which is sent to the user; and
m. the user sends the multiple-use cross community reputation certificate to the individual communities in which he is registered or to new communities that he wishes to join.

According to different embodiments of the method the reputation is represented by at least one of the following: a single-value reputation, a reputation that is comprised of a vector of values, an XML document reputation and a free-text reputation.

In embodiments of the method the cross community reputation of a user is an Asymmetric Cross-Community Reputation that is calculated by the CCRE by giving different weights to the user's reputation in each of the communities. The Asymmetric Cross-Community Reputation of a user can be calculated by the CCRE by using only the user's reputation in related communities.

If each user has a different pseudonym for each community and the pseudonyms are unlinkable, the community may choose to receive old or out-dated CCRCs.

In a third aspect, the invention is a method for using the system of the first aspect to enable a user to unregister from a community if the online interactions include a requirement that the CA maintain a record that contains a list of communities in which each user was registered in the past to prevent the user from hiding a bad reputation. The method comprises:
a. the community issues a single-use unregistration certificate to the user;
b. the user presents the unregistration certificate to the CA; and
c. the CA updates the list of communities that the user is registered.

An embodiment of the method of the third aspect of the invention enables a user to re-register in a community from which he has previously unregistered. This embodiment comprising a requirement that the CA issue a special certificate that specifies that the user was previously registered to the specific community and has previously unregistered.

The above and other characteristics and advantages of the invention will be more readily apparent through the following examples.

### Brief Description of the Drawings

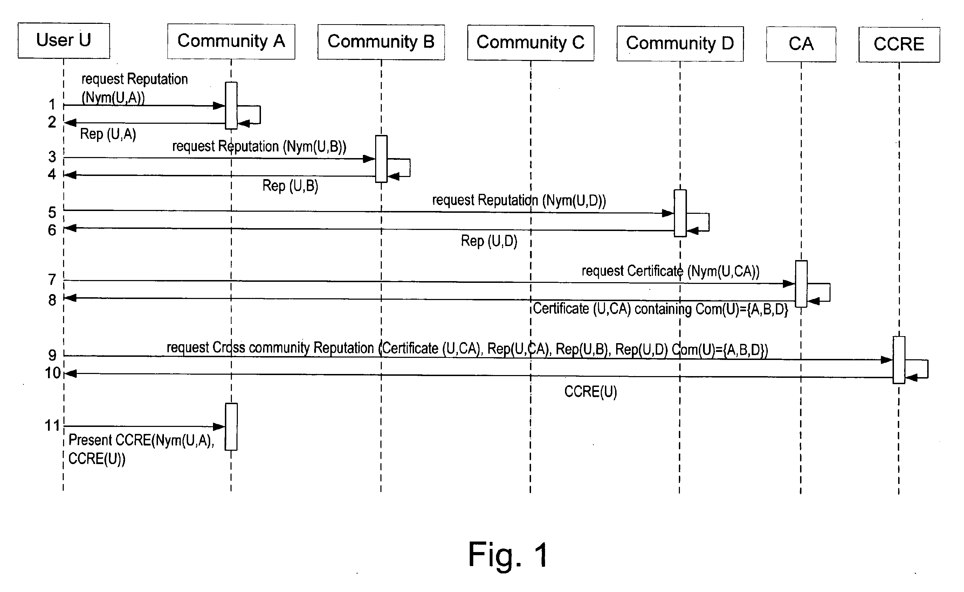

- Fig. 1: is a diagram that illustrates the method of the invention for obtaining a cross-community reputation.

### Detailed Description of the Invention

Meanings of the terms, as used herein, are:
■ "Users" refers to individuals that use the scheme of the present invention, as shown in Fig. 1. Each user has a public/private key pair, pseudonym for each community he participates in, reputation from each community he participates in, and a cross-community reputation. *ID(U)* is the real identity of a user *U*, and *Com(U)* is the set of communities in which *U* participates. For each community *C*∈ *Com(U)*, user *U* obtains a different pseudonym, denoted *Nym(U, C)*.
■ "Community" refers to the organization in which the interaction between users takes place. The Community issues a reputation certificates for its users.
■ "Group of communities" refers to a plurality of communities that have agreed to cooperate in order to use the present invention.
■ "Reputation" refers to the performance measure of a single user in a single community.
■ "Cross Community Reputation (CCR)" refers to the aggregate reputation of a single user across all communities he participates in. The cross community reputation is presented by the user to a community in order to reflect his behavior in other communities.
■ "Central Authority (CA)" refers to the administrative unit responsible for authenticating the validity of users, and disclosing their identity in case of illegal or malicious activity.
■ "Cross-Community Reputation Entity (CCRE)" refers to the administrative unit responsible for issuing a cross-community reputation certificate (CCRC), based on the reputation certificates from different communities.
■ "Interactions" are communications between users, communities in a group, the CA and the CCRE. All interactions take place on the Internet.
■ "User Agent" refers to a software component of the system that is running on the user's device and that carries out automatically a series of interactions on the behalf of the user, according to the commands issued by the user.
■ "Asymmetric Cross-Community Reputation" refers to situations where some communities are related to each other, and some are not. In this case, the reputation of a user in a related-community weighs more than his reputation in an un-related community. Unlike (symmetric) Cross Community Reputation that depends only on the user, regardless of the community it is presented to, asymmetric Cross Community reputation depends also on the target community and its specific relation to other communities.
■ "Computer" as used herein is a generic term meant to designate any device that is capable of running the software components of the invention. For example, a user "computer" can be a device such as a personal computer (PC), a cell-phone, or a personal digital assistant (PDA).

The present invention supports any reputation representation, which includes a single-value reputation, a reputation that is comprised of a vector of values (e.g., a grade for each property), an XML document reputation and even a free-text reputation. The CCRE is responsible for parsing the certificates it receives and calculating the cross-community reputation accordingly.

Once a person requests to join a community that is one of the group of communities, he is required by the CA of the group of communities to first register generally in the system of the present invention. In this stage, the user authenticates himself to the CA, by giving his master (public) key and proves knowledge of the matching private key. In return, the CA opens an internal record of the user, and gives the user a pseudonym (nym), denoted *Nym(U, CA))*. This registration step is evoked only once, and after it is completed, the user can join or leave any community.

Upon the first interaction between the user and the communities of his choice, the user is required to register separately to each community he would like to participate in. To accomplish this, the user *U* authenticates himself to the CA by *Nym(U, CA)* and then asks for permission to register to community *C.* In response, the CA issues a single-use certificate, enabling the user *U* to register with the specific community. The CA maintains in the record of user *U*, the value of *Com(U)* (that is, *Com (U) := Com(U)* ∪ *{C}*). Finally, User *U* interacts with community C using this certificate, in order to obtain *Nym(U, C)*. After getting *Nym(U, C),* user *U* can interact with *C* and present *C* any reputation certificates he possesses, without revealing his identity. However, any attempt of certificate transfer between users will reveal their identities.

The present invention also enables the user to unregister from a community. For this purpose, the user *U* authenticates himself to the community C by *Nym(U, C)*, and asks to unregister from the community. Next, Community *C* issues a single-use unregistration certificate to *U*, and finally, user *U* presents this unregistration certificate to the CA, which updates *Com(U) := Com(U)* \ *{C}*. From this stage on, any future transactions between *U* and *C* would require a new registration.

A simple fraud a user could carry out in order to hide a bad reputation in a community *C*, is to unregister from *C* and then register again. The method of the invention prevents such fraud by requiring the CA to maintain for each user *U* a record called *Past(U)*, that contains the communities in which *U* was registered in the past (possibly with time-stamps). It can be either the policy of the CA or the policy of a specific community to prevent a user *U* from re-registering to the same community. An option that enables re-registering is provided, wherein the CA, issues a special certificate that specifies that the user *U* was previously registered to community *C* and has unregistered. In a preferred embodiment, this certificate contains additional information, such as the date the user unregistered from the community.

Fig. 1 schematically shows how a user obtains a cross-community reputation and presents it to one of the communities he participates in, according to the method of the present invention. The columns in the figure represent the different entities involved in the process, which are: the user, the different communities in the group (A, B, C and D), the CA and the CCRE. In this example, the user participates only in communities A, B and D. The numbers in column 1 of Fig. 1 indicate the steps that are taken by the different entities during the process of obtaining and presenting a cross-community reputation. After the user initiates a request for obtaining a CCR, the steps depicted in Fig. 1 are carried out automatically by the User Agent, the communities, the CA and the CCRE. First, as shown in steps 1-6, user *U* interacts with each community *X* ∈ *Com(U),* asks for and receives *Rep(U, X)*. In step 7, user *U* requests from the CA a certificate of authentication, and in response, the CA issues in step 8 a single use validity certificate for *U*, in which *Com(U)* is specified (in this case, *Com (U)=*{A,B,C}. Next, in step 9 user *U* interacts with the CCRE and presents his validity certificate, and the reputation certificates from all communities in *Com(U).* The CCRE verifies that it has received all required reputation certificates, and then (step 10) issues a time-stamped multiple-use cross-community reputation certificate (CCRC). In step 11 of Fig. 1, user *U* presents the CCRC to community A, in order to improve his reputation.

According to the present invention, the CCRC can be presented by the user to any of the different communities he participates in, or to any new communities he joins. It is up to the community policy to determine whether it receives old or out-dated CCRCs. It is important to notice that since CA attaches the value of *Com(U)* to the validity certificate of *U*, it is impossible to hide a bad reputation in some of the communities.

A preferred embodiment of the present invention provides a method for calculation of an Asymmetric Cross-Community Reputation, thereby obtaining a reputation that can be transferred directly between communities, whether they are related to each other or not. This method is suitable, for example, when two communities *C₁* and *C₂* are closely related and therefore it may be desired to transfer the reputation a user *U* obtains in one community (that is, *C₁*) directly to the other community (that is, *C₂*), without taking into account *U*s reputation in other non-related communities. More generally, the CCRE is able to perform an asymmetric cross-community reputation calculation, taking into account the similarity and relations between the different communities. For example, if the cross-community reputation should be presented to a community *C₃*, and suppose the CCRE has prior knowledge on how close community *C₃* is to other communities in the system, the CCRE can use this knowledge and compute a cross-community reputation that reflects these relations. This result will reflect better how community *C₃* should view the user. It is important to notice that in such asymmetric calculations, the cross-community reputation depends on the community to which the reputation is to be presented. Hence, the user must specify to the CCRE the final destination of the cross-community reputation. In turn, the CCRE will issue, as described above, a single-use certificate and specify its destination.

According to another preferred embodiment of the present invention, the CCRE learns from each user *U* that asks for his cross-community reputation, the set *Com(U),* the *Nym(U, CA))* and the reputation of *U* in each community (but not *U*s real identity or *nyms*). Therefore, it can calculate the similarity between communities based on common membership lists (that is, community *C₁* and community *C₂* are similar if there are many users who are registered to both *C₁* and *C₂*) or common reputation values (that is, community *C₁* and community *C₂* are similar if many users have similar reputation values in *C₁* and *C₂*). The similarity between communities can dictate the relations between them in case they are not known a-priori.

Although embodiments of the invention have been described by way of illustration, it will be understood that the invention may be carried out with many variations, modifications, and adaptations, without departing from its spirit or exceeding the scope of the claims.

## Claims

1. A system to determine a cross community reputation for the users of for a group of online communities, said system comprising:
a. computers of a plurality of users who are members of one or more of said communities;
b. computers of each of said communities in said group of online communities;
c. computers of a Central Authority (CA) which is responsible for authenticating the validity of users, and disclosing their anonymity in case of illegal or malicious activity;
d. computers of a Cross-Community Reputation Entity (CCRE) which is responsible for issuing a cross-community reputation certificate (CCRC), based on the reputation certificates from said communities; and
e. software components located on each of said computers of said users, said communities, said CA, and said CCRC;
wherein said cross community reputation is determined by said software components, which are configured to enable carrying out online interactions according to a predetermined sequence between the computers of said users, communities, CA and CCRE.

2. A system according to claim 1, wherein the online interactions include a requirement that the CA maintain a record that contains a list of communities in which each user was registered in the past to prevent said user from hiding a bad reputation.

3. A system according to claim 1, wherein each user has a different pseudonym for each community, said pseudonyms being unlinkable.

4. A computer implemented method for using the system of claim 1 to determine a cross-community reputation for a specific user that participates in one or more communities belonging to the group of communities, while maintaining the anonymity of said user, wherein said method is administered by the CA and the CCRE, said method comprising the steps of
a. said user requests from CA to generally register in the system;
b. CA opens an internal record of the user and issues a pseudonym to said user;
c. said user authenticates himself to CA by using said pseudonym, and requests to register in one or more of the communities that are members of said group;
d. CA issues a single-use certificate for each of said communities, wherein each of said single-use certificate enables said user to register in one specific community;
e. said user presents said certificate/s to the community/ies of his choice;
f. said user receives from each of said communities of his choice a pseudonym which allows him to interact with other members of said group community;
g. as time passes, each community compiles a reputation for said user;
h. said user requests his reputation from each community;
i. said user sends his pseudonyms from all of the communities in which he is registered to CA and requests certification;
j. CA issues a single-use validity certificate containing a list of all of said user's communities;
k. said user sends said single-use validity certificate and said reputation from each community to CCRE;
l. CCRE checks that it received said user's reputation from all the communities and said single-use validity certificate and calculates a time stamped multiple-use cross community reputation certificate which is sent to said user; and
m. said user sends said multiple-use cross community reputation certificate to the individual communities in which he is registered or to new communities that he wishes to join.

5. A method according to claim 4 wherein the reputation is represented by at least one of the following: a single-value reputation, a reputation that is comprised of a vector of values, an XML document reputation and a free-text reputation.

6. A method for using the system of claim 2 to enable a user to unregister from a community, said method comprising:
a. the community issues a single-use unregistration certificate to said user;
b. said user presents said unregistration certificate to the CA; and
c. said CA updates the list of communities that said user is registered.

7. A method according to claim 6 enabling a user to re-register in a community from which he has previously unregistered, said method comprising a requirement that the CA issue a special certificate that specifies that said user was previously registered to the specific community and has previously unregistered.

8. A method according to claim 3 wherein the community may choose to receive old or out-dated CCRCs.

9. A method according to claim 4, wherein the cross community reputation of a user is an Asymmetric Cross-Community Reputation that is calculated by the CCRE by giving different weights to the user's reputation in each of the communities.

10. A method according to claim 9 wherein the Asymmetric Cross-Community Reputation of a user is calculated by the CCRE by using only his reputation in related communities.
